# FASCICULE DE BREVET EUROPEEN

(11) **EP 4 063 848 B1**
(45) Date de publication et mention de la délivrance du brevet: **12.08.2026**
(21) Numéro de dépôt: 22160596.7
(22) Date de dépôt: 07.03.2022
(51) Int. Cl.: G01N 29/04, G01N 29/06, G01N 29/07, G01N 29/32, G01N 29/44

(54) **PROCÉDÉ ET DISPOSITIF D ANALYSE DE CONFORMITÉ D'UN MASTIC D'INTERPOSITION INTÉGRÉ DANS UNE STRUCTURE, EN PARTICULIER D'UN AÉRONEF**
VERFAHREN UND VORRICHTUNG ZUR ANALYSE DER KONFORMITÄT EINES IN EINE STRUKTUR, INSBESONDERE EINES LUFTFAHRZEUGS, INTEGRIERTEN ZWISCHENLAGENKITTS
METHOD AND DEVICE FOR ANALYSING THE CONFORMITY OF A PUTTY FOR INSERTION INTEGRATED IN A STRUCTURE, IN PARTICULAR OF AN AIRCRAFT

(30) Priorité: 26.03.2021 FR 2103078
(43) Date de publication de la demande: 28.09.2022
(73) Titulaire: AIRBUS OPERATIONS (S.A.S.), 31060 Toulouse (FR)
(72) Inventeur: AUFFRAY, Stéphane, 31060 TOULOUSE (FR)
(74) Mandataire: Gevers & Orès

(56) Documents cités:
- RU-C1- 2 029 225
- US-A1- 2006 266 123
- US-A1- 2010 043 194
- US-A1- 2018 143 164
- FREEMANTLE R ET AL: "Rapid phased array ultrasonic imaging of large area composite aerospace structures", INSIGHT - NON-DESTRUCTIVE TESTING AND CONDITION MONITORING, 1 March 2005 (2005-03-01), XP055868075, Retrieved from the Internet <URL:http://dx.doi.org/10.1784/insi.47.3.129.61315> [retrieved on 20211201], DOI: 10.1784/insi.47.3.129.61315
- VIJAYA KUMAR R L ET AL: "Some studies on evaluation of degradation in composite adhesive joints using ultrasonic techniques", ULTRASONICS, IPC SCIENCE AND TECHNOLOGY PRESS LTD. GUILDFORD, GB, vol. 53, no. 6, 7 March 2013 (2013-03-07), pages 1150 - 1162, XP028540914, ISSN: 0041-624X, DOI: 10.1016/J.ULTRAS.2013.01.014

## Description

### DOMAINE TECHNIQUE

La présente invention concerne un procédé et un dispositif d'analyse de conformité d'un mastic d'interposition intégré dans une structure, en particulier d'un aéronef, ladite structure comprenant au moins deux pièces partiellement superposées entre lesquelles est agencé le mastic d'interposition.

### ETAT DE LA TECHNIQUE

Bien que non exclusivement, ce procédé est destiné plus particulièrement à apporter une aide lors de la mise en œuvre d'opérations d'assemblage sur des chaînes de production d'aéronefs, en particulier d'avions de transport.

La structure envisagée comprend au moins deux pièces partiellement superposées, par exemple des panneaux ou des peaux, entre lesquelles est agencé le mastic d'interposition. Cette structure peut notamment correspondre à une partie du fuselage d'un aéronef. Plus particulièrement, il peut s'agir de la fixation entre eux de deux tronçons de fuselage d'un aéronef ou de la fixation d'un panneau sur une partie du fuselage de l'aéronef.

Dans le cadre de la présente invention, on entend par mastic d'interposition, tout produit de type polymère susceptible d'être interposé entre deux pièces superposées, et présentant des propriétés d'adhérence à ces pièces ainsi que des propriétés d'étanchéité. Un tel mastic d'interposition peut également présenter d'autres caractéristiques ou propriétés, en fonction de l'application envisagée, telles que par exemple des propriétés de protection contre la corrosion.

Ledit procédé est particulièrement bien approprié à des opérations d'assemblage dits « sans éclatement » (ou OWA pour « One Way Assembly » en anglais) d'un aéronef. De façon connue, de telles opérations sans éclatement n'imposent pas de désassemblage, de nettoyage, et de réassemblage après réglage, piquage, perçage et pose des fixations, à la différence d'autres opérations d'assemblage usuelles. De telles opérations sans désassemblage sont donc particulièrement avantageuses en termes de temps et ainsi de coût.

Bien entendu, quel que soit le mode d'assemblage considéré, un fluage correct du mastic d'interposition appliqué entre les deux pièces superposées est nécessaire. Le fluage du mastic d'interposition peut notamment être perturbé par la présence de copeaux générés par le perçage des pièces pour créer des ouvertures destinées à recevoir des éléments de fixation tels que des rivets. Pour que le mastic d'interposition puisse remplir ses fonctions, en particulier d'étanchéité, il ne doit pas apparaître de copeaux entre les pièces et le mastic d'interposition doit être réparti de la manière requise.

Pour vérifier cette conformité, on réalise, actuellement, uniquement une vérification visuelle de la structure assemblée. Un aspect général jugé défaillant génère un protocole de désassemblage, puis de nettoyage et de réassemblage des pièces.

Toutefois, bien qu'elle soit efficace dans certains cas, l'observation visuelle présente une fiabilité qui n'est pas optimale. Il est, en effet, impossible de voir à l'intérieur de la structure. Ainsi, une légère présence de copeaux peut passer inaperçue ou bien un aspect jugé à tort légèrement défaillant peut engendrer des ouvertures non fondées, qui génèrent une perte de temps. A titre d'illustration, pour un cadre du fuselage d'un avion de transport, la mise en œuvre d'un protocole de désassemblage, de nettoyage et de réassemblage peut durer plusieurs heures.

Par ailleurs, par l'article intitulé « Rapid phased array ultrasonic imaging of large area composite aerospace structures » publié dans la revue Insight - Non-destructive Testing and Condition Monitoring du 1er mars 2005 (extrait de l'internet, URL: http://dx.doi.org/10.1784/insi.47.3.129.61315), on connaît des dispositifs particuliers de contrôle non destructif à ultrasons qui sont utilisés sur des structures aéronautiques.

On connaît également, par le document US 2010/043194 A1 du 25 février 2010, un procédé pour assembler des ensembles, comme des tronçons de fuselage, à l'aide d'une pluralité d'organes de fixation.

Par le document US 2006/266123 A1 du 30 novembre 2006, on connaît un dispositif de contrôle non destructif d'une structure mettant en œuvre deux sondes couplées électro-magnétiquement, ce qui permet de synchroniser lesdites sondes afin de les déplacer et les positionner plus précisément.

Par le document intitulé « Some studies on evaluation of degradation in composite adhesive joints using ultrasonic techniques », publié dans la revue Ultrasonics (vol. 53, no. 6) du 7 mars 2013, on connaît une étude sur l'estimation par ultrasons de dégradations de joints adhésifs réalisés en matériau composite et en epoxy.

Par le document US 2018/143164 A1 du 24 mai 2018, on connaît un dispositif permettant d'évaluer la qualité d'un joint en se basant sur un facteur de porosité établi, au moins partiellement, à partir d'analyses d'images.

Par le document RU 2 029 225 C1 du 20 février 1995, on connaît une méthode pour mesurer la rugosité d'une surface par application d'un mastic qui est pressé sur ladite surface.

Il existe donc un besoin de disposer d'une solution permettant de réaliser une vérification - autre que visuelle - d'une structure assemblée telle que décrite ci-dessus, qui est à la fois précise, rapide et fiable et ne nécessite pas de désassemblage de la structure.

### EXPOSÉ DE L'INVENTION

La présente invention a pour objet de répondre à ce besoin. Pour ce faire, elle concerne un procédé d'analyse de conformité d'un mastic d'interposition intégré dans une structure, en particulier d'un aéronef, ladite structure comprenant au moins deux pièces partiellement superposées entre lesquelles est agencé le mastic d'interposition.

Selon l'invention, ledit procédé comporte au moins une suite d'étapes comprenant :
- une étape de mesure, mise en œuvre par une unité de mesure ultrasonore, consistant à générer un signal ultrasonore, à envoyer le signal ultrasonore dans la structure à partir d'au moins un point de mesure et à mesurer l'amplitude du signal ultrasonore renvoyé par ladite structure en fonction d'un temps de vol correspondant ;
- une première étape de traitement, mise en œuvre par une première unité de traitement, consistant à déterminer l'épaisseur du mastic d'interposition au niveau dudit point de mesure, à partir des mesures réalisées à l'étape de mesure et à l'aide d'un modèle de propagation prédéterminé dudit mastic d'interposition ainsi que de données auxiliaires, ledit modèle de propagation étant caractéristique du type dudit mastic d'interposition et fournissant une valeur d'épaisseur du mastic d'interposition en fonction du temps de vol du signal ultrasonore dans le mastic d'interposition ainsi que desdites données auxiliaires ; et
- une seconde étape de traitement, mise en œuvre par une seconde unité de traitement, consistant à déduire, à partir de l'épaisseur du mastic déterminée à la première étape de traitement, au moins une conformité ou une absence de conformité dudit mastic d'interposition.

Ainsi, grâce audit modèle de propagation prédéterminé du mastic d'interposition et aux mesures ultrasonores réalisées à partir de l'extérieur de la structure, on est en mesure de vérifier si le mastic d'interposition est conforme (notamment en termes d'épaisseur) à ce qui est attendu, et ceci sans désassembler la structure. On obtient ainsi un procédé permettant de réaliser une vérification précise, rapide et fiable de la conformité du mastic d'interposition intégré dans la structure.

Selon l'invention, lesdites données auxiliaires comprennent au moins :
- la température ; et
- la durée depuis laquelle le mastic d'interposition a été intégré dans la structure.

Dans le cadre de la présente invention, le procédé peut être utilisé pour réaliser des mesures à un point de mesure particulier de la structure. Toutefois, de préférence, l'étape de mesure consiste à réaliser des mesures à une pluralité de points de mesure différents de la structure, permettant par exemple d'analyser toute une surface donnée, et la première étape de traitement consiste à déterminer l'épaisseur du mastic d'interposition au niveau de ladite pluralité de points de mesure de la structure.

Dans un mode de réalisation préféré, la seconde étape de traitement consiste également à déterminer la présence ou l'absence de copeaux dans la structure. Ce mode de réalisation préféré permet l'identification et localisation de la présence de copeaux, notamment métalliques, en particulier à proximité d'éléments de fixation de la structure. Ces vérifications s'effectuent donc sans avoir besoin de désassembler la structure.

Avantageusement, le procédé comporte, de plus, une étape préliminaire, mise en œuvre antérieurement à ladite suite d'étapes et consistant à déterminer ledit modèle de propagation au moins dudit type de mastic d'interposition. Dans un mode de réalisation particulier, l'étape préliminaire consiste à déterminer un modèle de propagation pour chacun d'une pluralité de types différents de mastic d'interposition.

Par ailleurs, selon l'invention, pour déterminer une conformité du mastic d'interposition, la seconde étape de traitement consiste à vérifier, pour chacun d'une pluralité de réseaux rectangulaires de la structure, chacun desdits réseaux rectangulaires étant défini par quatre points de fixation destinés à solidariser les pièces de la structure, que l'épaisseur du mastic d'interposition est comprise dans un premier domaine de valeurs prédéterminé au centre du réseau rectangulaire et que l'épaisseur du mastic d'interposition est inférieure à une valeur prédéterminée aux coins du réseau rectangulaire.

En outre, avantageusement, l'étape de mesure consiste à générer un signal (à savoir une impulsion) ultrasonore présentant une fréquence comprise entre 10 MHz et 15 MHz.

La présente invention concerne également un dispositif d'analyse de conformité d'un mastic d'interposition intégré dans une structure, selon les revendications 7 et 8.

Le dispositif tel que décrit ci-dessus peut être utilisé dans différentes applications, notamment pour réaliser des vérifications de conformité lors d'opérations d'assemblage d'un aéronef, notamment d'opérations d'assemblage « sans éclatement ». Il peut également être utilisé pour valider de nouvelles étapes ou actions de procédés d'assemblage. Il s'applique à différents types de structure, formés par exemple de pièces métalliques, de pièces en matériau composite, ou à la fois d'au moins une pièce métallique et une pièce en matériau composite.

### BRÈVE DESCRIPTION DES FIGURES

Les figures annexées feront bien comprendre comment l'invention peut être réalisée. Sur ces figures, des références identiques désignent des éléments semblables.
La figure 1 est le schéma synoptique d'un mode de réalisation particulier d'un dispositif d'analyse.
La figure 2 est une vue partielle, en coupe, d'une structure destinée à être analysée à l'aide du dispositif d'analyse.
La figure 3 illustre schématiquement une analyse qui est réalisée sur la structure de la figue 2.
La figure 4 montre schématiquement les étapes principales d'un procédé d'analyse.
La figure 5 est une vue en plan d'une partie de structure sur laquelle on a représenté la répartition d'un mastic d'interposition.
La figure 6 montre un graphique qui illustre la variation de l'amplitude du signal ultrasonore renvoyé par la structure en fonction du temps de vol.
La figure 7 est une vue partielle, en coupe, d'une structure particulière, susceptible d'être analysée par le dispositif d'analyse.

### DESCRIPTION DÉTAILLÉE

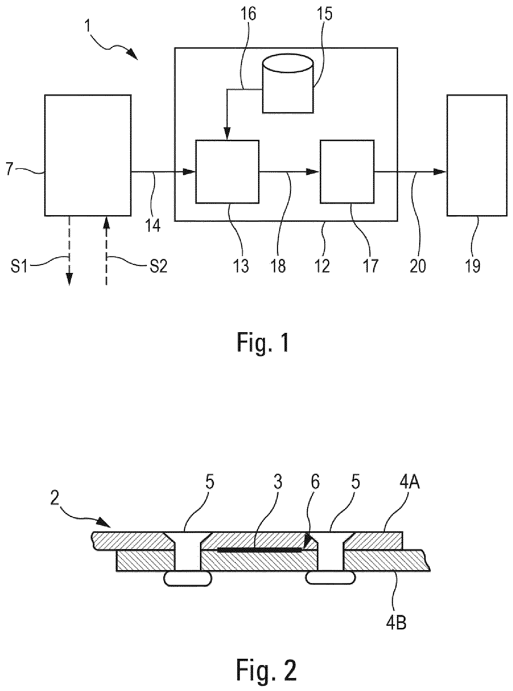

Le dispositif 1 représenté schématiquement sur la figure 1 et permettant d'illustrer l'invention est un dispositif d'analyse de conformité d'un mastic d'interposition 3 intégré dans une structure 2 (figure 2), en particulier dans une structure d'un aéronef.

Dans le cadre de la présente invention, la structure 2 comprend au moins deux pièces 4A et 4B, par exemple en métal ou en matériau composite, entre lesquelles est agencé le mastic d'interposition 3, comme représenté sur la figure 2.

La structure 2 envisagée comprend donc au moins deux pièces 4A et 4B, par exemple des pièces planes ou incurvées, telles que des panneaux ou des peaux, qui sont au moins partiellement superposées (c'est-à-dire qui sont en contact l'une de l'autre par au moins une partie d'une de leurs surfaces), et entre lesquelles est agencé le mastic d'interposition 3. Cette structure 2 peut notamment correspondre à une partie du fuselage d'un aéronef, en particulier d'un avion de transport. A titre d'illustration, il peut s'agir de deux tronçons du fuselage qui sont assemblés ou d'un panneau qui est fixé sur une partie du fuselage. Sur l'exemple de la figure 2, on a également représenté des éléments de fixation 5, en l'occurrence des rivets, qui sont destinés à la fixation des pièces 4A et 4B l'une à l'autre.

La structure 2 peut également comprendre plus de deux pièces partiellement superposées, par exemple trois ou quatre pièces comme précisé ci-dessous, avec à chaque fois du mastic d'interposition 3 agencé entre deux pièces superposées.

Dans le cadre de la présente invention, le mastic d'interposition 3 est un produit polymère (susceptible d'être interposé entre deux pièces superposées) qui présente des propriétés d'adhérence à ces pièces ainsi que des propriétés d'étanchéité. Un tel mastic d'interposition peut également présenter d'autres caractéristiques ou propriétés, en fonction de l'application envisagée, telles que par exemple des propriétés de protection contre la corrosion. Il peut notamment s'agir d'un mastic dit « PR » (pour « Polymérisation Rapide »).

Le mastic d'interposition 3 peut ainsi, notamment, servir à étanchéifier une partie ou toute la zone de recouvrement (ou de superposition) 6 des deux pièces 4A et 4B superposées (figure 2).

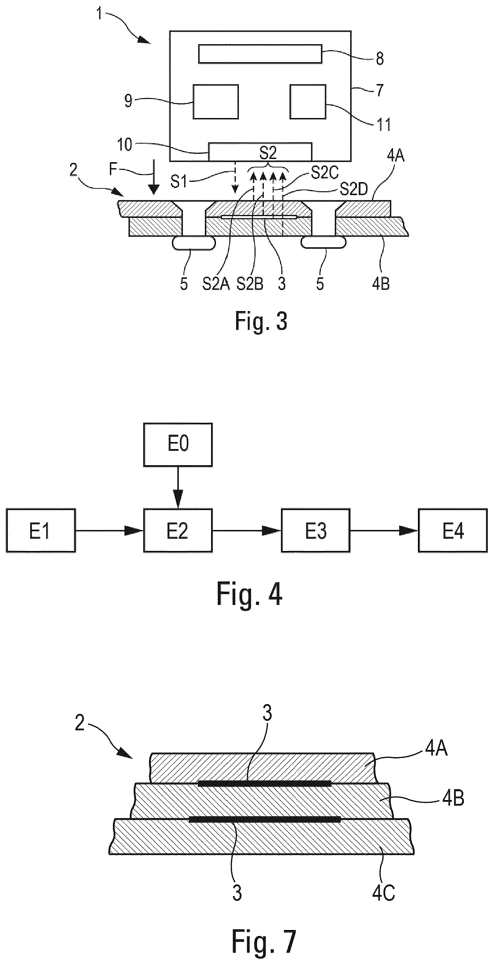

Le dispositif 1 comporte, comme représenté sur la figure 1, une unité de mesure ultrasonore 7. Cette unité de mesure ultrasonore 7 est configurée :
- pour générer un signal ultrasonore S1. De préférence, le signal ultrasonore S1 est formé d'une impulsion ultrasonore ;
- pour émettre le signal ultrasonore S1 (ainsi généré) dans la structure 2 à partir d'au moins un point de mesure précisé ci-dessous, dans le sens illustré par une flèche F sur la figure 3, c'est-à-dire de préférence orthogonalement à la surface externe de la pièce 2 au point de mesure ; et
- pour mesurer l'amplitude du signal ultrasonore S2 renvoyé par ladite structure 2, dans le sens opposé au sens F (figure 3). Le signal ultrasonore S2 correspond à la partie du signal ultrasonore S1 qui est renvoyée par la structure 2.

Pour ce faire, dans un mode de réalisation particulier, l'unité de mesure ultrasonore 7 comporte, comme représenté sur la figure 3 :
- un élément de commande 8 de l'unité de mesure ultrasonore 7 ;
- un élément de génération 9 du signal ultrasonore S1 ;
- un élément d'émission-réception 10 pourvu par exemple d'une antenne, pour émettre le signal ultrasonore S1 généré et pour recevoir le signal ultrasonore S2 renvoyé par la structure 2 ; et
- un élément de mesure 11 du signal ultrasonore S2 reçu.

L'élément de mesure 11 réalise une mesure de l'amplitude du signal ultrasonore S2 reçu en fonction du temps de vol, c'est-à-dire du temps entre l'émission du signal ultrasonore S1 par l'élément d'émission-réception 10 et la réception (après réflexion sur la structure) du signal ultrasonore S2 par l'élément d'émission-réception 10.

La propagation du signal ultrasonore dans la structure 2 se caractérise par des pics (de réflexion) caractéristiques, qui correspondent à des ruptures d'impédance acoustique dans la structure, aux interfaces de matériaux différents, et notamment à l'interface entre la pièce 4A et le mastic d'interposition 3 et à l'interface entre le mastic d'interposition 3 et la pièce 4B.

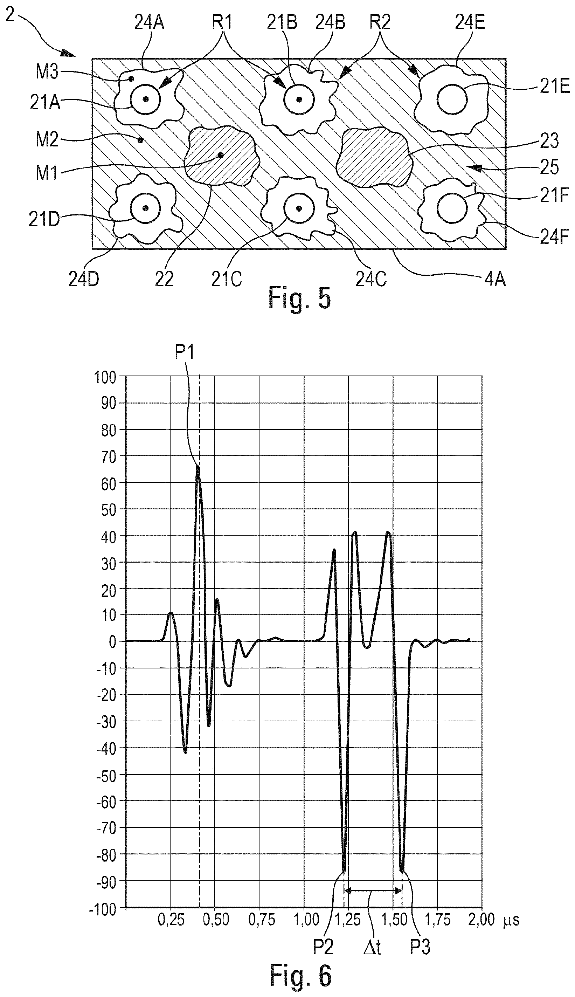

Sur la figure 3, on a illustré différentes parties de signal S2A, S2B, S2C et S2D du signal ultrasonore S2, qui sont renvoyées par des interfaces différentes. A titre d'illustration :
- la partie de signal S2A correspond au pic P1 de réflexion (figure 6) à l'entrée dans la pièce 4A ;
- la partie de signal S2B correspond au pic P2 de réflexion (figure 6) à la sortie de la pièce 4A.

Dans un mode de réalisation préféré, le signal (ou impulsion) ultrasonore S1 présente une fréquence comprise entre 10 MHz et 15 MHz. L'utilisation d'un signal ultrasonore de fréquence aussi élevée permet d'offrir une résolution maximale en rapport avec l'analyse réalisée. L'identification des pics est, en effet, facilité par de telles fréquences élevées du signal ultrasonore utilisé.

Ledit dispositif 1 comporte également, comme représenté sur la figure 1, un module de traitement 12. Ce module de traitement 12 comprend :
- une unité de traitement 13 configurée pour déterminer l'épaisseur du mastic d'interposition 3 au niveau du ou des points de mesure considérés. L'unité de traitement 13 détermine l'épaisseur du mastic d'interposition à partir des mesures (réalisées par l'unité de mesure ultrasonore 7) qui sont reçues par l'intermédiaire d'une liaison 14, et à l'aide d'un modèle de propagation prédéterminé dudit mastic d'interposition, qui est par exemple intégré dans une base de données 15 (reliée par l'intermédiaire d'une liaison 16 à l'unité de traitement 13). L'unité de traitement 13 prend également en compte des données auxiliaires (notamment la température et la durée depuis laquelle le mastic d'interposition a été appliqué dans la structure), comme précisé ci-dessous. Le modèle de propagation est caractéristique du type de mastic d'interposition utilisé et fournit une valeur d'épaisseur du mastic d'interposition en fonction du temps de vol du signal ultrasonore dans le mastic d'interposition, ainsi que desdites données auxiliaires comme également précisé ci-dessous ; et
- une unité de traitement 17 configurée pour déduire de l'épaisseur du mastic (déterminée par l'unité de traitement 13 et reçue par l'intermédiaire d'une liaison 18) une conformité ou une absence de conformité du mastic d'interposition.

Ainsi, le dispositif 1 est en mesure, grâce notamment au modèle de propagation prédéterminé du mastic d'interposition et aux mesures ultrasonores réalisées par l'unité de mesure ultrasonore 7, de vérifier si le mastic d'interposition 3 est conforme (notamment en termes d'épaisseur) à ce qui est attendu. On dispose ainsi d'un dispositif 1 permettant de réaliser une vérification précise, rapide et fiable, et ceci sans désassembler la structure 2.

Dans un mode de réalisation préféré, l'unité de traitement 17 est configurée pour déterminer également la présence ou l'absence de copeaux dans la structure 2. Ce mode de réalisation préféré permet, le cas échéant, l'identification et localisation de copeaux, en particulier à proximité des éléments fixation 5 (figure 2).

L'ensemble de ces vérifications sont donc effectuées sans avoir besoin de désassembler la structure 2. Le dispositif 1 est ainsi particulièrement bien approprié à réaliser des analyses lors d'opérations d'assemblage dits « sans éclatement » (ou OWA pour « One Way Assembly » en anglais) d'un aéronef.

Ledit dispositif 1 comporte également un ensemble 19 de moyens ou dispositifs (non représentés individuellement) qui sont configurés pour fournir à un opérateur ou à un système le résultat (reçu par une liaison 20) du traitement mis en œuvre par l'unité de traitement 17. Pour ce faire, l'ensemble 19 peut, notamment, comporter :
- un moyen usuel pour afficher le résultat (conformité ou absence de conformité du mastic d'interposition ; présence ou absence de copeaux et localisation éventuelle) ;
- un moyen usuel pour imprimer le résultat ;
- un moyen usuel pour transmettre le résultat, par exemple via une liaison filaire ou une liaison non filaire.

Le dispositif 1, tel que décrit ci-dessus, est apte à mettre en œuvre un procédé P d'analyse de conformité d'un mastic d'interposition intégré dans une structure, par exemple telle que celle représentée sur la figure 2. Ledit procédé P représenté schématiquement sur la figure 4 est décrit ci-dessous, en référence notamment aux figures 5 et 6.

Le procédé P comprend une étape de mesure E1 (figure 4), mise en œuvre par l'unité de mesure ultrasonore 7 (figure 1). Cette étape de mesure E1 consiste à générer le signal ultrasonore S1, et à émettre le signal ultrasonore S1 (ainsi généré) dans la structure 2 à partir d'au moins un point de mesure, dans le sens F illustré sur la figure 3.

Dans le cadre de la présente invention, le procédé P peut être utilisé pour réaliser des mesures à un point de mesure particulier de la structure 2, par exemple à un endroit où l'on estime possible un problème potentiel de conformité.

Toutefois, de préférence, l'étape de mesure E1 consiste à réaliser des mesures à une pluralité de points de mesure différents de la structure 2, permettant par exemple d'analyser toute une surface donnée de cette structure 2 et en particulier une partie ou l'intégralité de la zone de recouvrement 6 des deux pièces 4A et 4B (figure 2). A titre d'illustration, on a représenté sur la figure 5, quelques points de mesure M1, M2, M3 sur la pièce 4A d'une structure 2 (correspondant par exemple à celle de la figure 2, vue de dessus). Pour chaque point de mesure, la mesure réalisée peut être considérée comme s'appliquant à une zone donnée (par exemple rectangulaire ou circulaire) autour du point de mesure. On a également représenté sur la figure 5 des orifices 21A à 21F destinés à recevoir des éléments de fixation (non représentés). Ces orifices sont, par exemple, générés par perçage lors d'un procédé d'assemblage de la structure et notamment d'un procédé d'assemblage sans éclatement.

A l'étape de mesure E1, l'unité de mesure ultrasonore 7 mesure l'amplitude du signal ultrasonore S2 renvoyé par la structure 2. Cette mesure de l'amplitude est réalisée en fonction du temps de vol, c'est-à-dire du temps entre l'émission du signal ultrasonore S1 par l'élément d'émission-réception 10 et la réception (après réflexion sur la structure 2) du signal ultrasonore S2 par l'élément d'émission-réception 10.

La propagation du signal ultrasonore dans la structure 2 se caractérise par des pics (de réflexion) caractéristiques correspondant à des ruptures d'impédance acoustique dans la structure, aux interfaces de matériaux différents, et notamment à l'interface entre la pièce 4A et le mastic d'interposition 3 et à l'interface entre le mastic d'interposition 3 et la pièce 4B.

A titre d'illustration, sur l'exemple de la figure 6, la courbe qui représente la variation de l'amplitude du signal ultrasonore S2 en fonction du temps de vol (exprimé en µs) comprend plusieurs pics caractéristiques. Plus particulièrement, elle comprend notamment :
- le pic P1 qui est le pic d'entrée dans la pièce 4A, via un liquide de couplage (film d'eau). Ce pic P1 est normalisé, c'est à dire calibré sur une amplitude supérieure ou égale à 80 % ;
- le pic P2 qui est le pic de sortie de la pièce 4A et le pic d'entrée dans le mastic d'interposition 3 ; et
- le pic P3 qui est le pic de sortie du mastic d'interposition 3 et le pic d'entrée dans la pièce 4B.

La différence Δt de temps de vol entre les pics P2 et P3 correspond donc au temps de propagation du signal ultrasonore à travers le mastic d'interposition 3 dans un trajet aller-retour. Cette différence Δt est utilisée à une étape de traitement E2 suivante du procédé P.

Le procédé P comprend donc également l'étape de traitement E2 mise en œuvre par l'unité de traitement 13. Cette étape de traitement E2 consiste à déterminer l'épaisseur du mastic d'interposition 3 au niveau de chacun des points de mesure M1, M2, M3. A l'étape de traitement E2, l'unité de traitement 13 détermine l'épaisseur du mastic d'interposition à partir des mesures réalisées à l'étape de mesure E1 et notamment de ladite différence Δt au point de mesure considéré, ainsi qu'à l'aide du modèle de propagation prédéterminé du mastic d'interposition.

Le modèle de propagation est caractéristique du type du mastic d'interposition utilisé et il fournit une valeur d'épaisseur (exprimé par exemple en millimètre) du mastic d'interposition en fonction du temps de vol (exprimé par exemple en µs) du signal ultrasonore dans le mastic d'interposition, ainsi que de données auxiliaires. Les données auxiliaires utilisées comprennent, de préférence, les données suivantes :
- la température ; et
- la durée depuis laquelle le mastic d'interposition a été appliqué dans la structure.

Par conséquent, grâce audit modèle de propagation, l'unité de traitement 13 associe au temps de vol Δt dans le matériau du mastic d'interposition une valeur d'épaisseur. Plus précisément, l'unité de traitement 13 détermine l'épaisseur E (exprimée par exemple en mm) du mastic d'interposition 3 à l'aide de la relation suivante :
$E = \left(vp.Δt\right) / 2$ dans laquelle :
- vp est la vitesse de propagation (exprimée par exemple en mm/µs) qui est définie dans le modèle de propagation ; et
- Δt est le temps de propagation (exprimé par exemple en secondes) du signal ultrasonore dans le mastic d'interposition selon un trajet aller-retour.

Dans un mode de réalisation préféré, la vitesse vp dépend de la température de l'environnement dans lequel se trouve la structure, ainsi que du temps depuis lequel le mastic d'interposition a été déposé dans la structure. En effet, la vitesse d'un signal ultrasonore dans le mastic d'interposition dépend de la polymérisation de ce dernier.

A titre d'illustration, le modèle de propagation peut prévoir pour un type particulier de mastic de propagation une vitesse vp de 1,65 mm/µs, après une durée de 20 heures (de dépôt), pour une température de 20°C. Cette vitesse vp peut varier si les conditions de température et de durée varient.

Le procédé P comprend également une étape de traitement E3 mise en œuvre par l'unité de traitement 17. L'étape de traitement E3 consiste à déduire, de l'épaisseur E du mastic d'interposition déterminée à l'étape de traitement E2, une conformité ou une absence de conformité dudit mastic d'interposition.

Pour ce faire, dans un mode de réalisation particulier, on prend en compte des réseaux rectangulaires R1 et R2, notamment carrés, pour déterminer une conformité du mastic d'interposition, comme représenté sur la figure 5. Chacun des réseaux rectangulaires R1 et R2 est défini par quatre points de fixation destinés à solidariser les pièces de la structure 2. Sur la figure 5, les points de fixation sont définis par des orifices 21A à 21F (destinés à recevoir des éléments de fixation). Le réseau R1 représente un rectangle dont les coins sont définis par les orifices 21A, 21B, 21C et 21D. De même, le réseau R2 représente un rectangle dont les coins sont définis par les orifices 21B, 21C, 21E et 21F.

On sait qu'un fluage correct (ou conforme) du mastic d'interposition 3 se caractérise par une épaisseur qui est minimale au niveau des éléments de fixation et une épaisseur qui est maximale à leur centre, conformément à un effet dit de « matelassage ».

Aussi, l'étape de traitement E3 consiste à vérifier, pour chacun d'une pluralité de réseaux rectangulaires R1, R2 de la structure 23, que les conditions suivantes sont remplies :
- au centre du réseau rectangulaire R1, R2, l'épaisseur du mastic d'interposition 3 est comprise dans un premier domaine de valeurs prédéterminé, par exemple entre 0,15 mm et 0,2 mm ; et
- aux coins (orifices 21A à 21F) du réseau rectangulaire R1, R2, l'épaisseur du mastic d'interposition 3 est inférieure à une valeur prédéterminée, par exemple 0,05 mm.

En fonction de ces vérifications :
- si les conditions précitées sont remplies pour tous les réseaux entre les deux pièces de la structure 2, l'étape de traitement E3 conclut à une conformité du mastic d'interposition 3 ; et
- si les conditions précitées ne pas sont remplies pour tous les réseaux entre les deux pièces de la structure 2, l'étape de traitement E3 conclut à une absence de conformité du mastic d'interposition 3.

Dans l'exemple de la figure 5, les conditions sont considérées comme remplies. Pour mettre en évidence cette conformité, on a représenté sur cette figure 5, l'épaisseur du mastic d'interposition 3 à l'aide de hachures plus ou moins denses. Plus précisément, dans cet exemple :
- des zones 24A à 24F (représentées en blanc) respectivement autour des orifices 21A à 21F (c'est-à-dire aux coins des réseaux R1 et R2) sont dépourvues de mastic ou contiennent une épaisseur de mastic réduite et acceptable. Dans l'exemple de la figure 5, le point de mesure M3 est situé dans la zone 24A ;
- des zones 22 et 23 (représentées en hachures denses) au centre des réseaux présentent une épaisseur importante et conforme de mastic d'interposition. Dans l'exemple de la figure 5, le point de mesure M1 est situé dans la zone 22 ;
- le reste de la zone de recouvrement (représentée en hachures plus denses) présente une épaisseur plus faible et conforme de mastic d'interposition. Dans l'exemple de la figure 5, le point de mesure M2 est situé à ce niveau.

A titre d'illustration, à l'inverse, dans l'exemple de la figure 5, on pourrait conclure à une absence de conformité du mastic d'interposition, en cas de présence de mastic d'interposition d'une épaisseur supérieure à 0.05 mm dans les zones 24A à 24F autour des orifices 21A à 21F et/ou si le mastic d'interposition au centre d'au moins un réseau rectangulaire (zones 22 et 23) est supérieur à 0,2 mm.

Dans un mode de réalisation préféré, l'étape de traitement E3 consiste également à déterminer la présence ou l'absence de copeaux dans la structure 2. On sait que la présence de copeaux au niveau des éléments de fixation perturbe le fluage naturel du mastic d'interposition sous pression mécanique, cette perturbation étant telle ou pouvant être telle que le mastic d'interposition ne respecte alors pas les conditions requises précisées ci-dessus. Ce mode de réalisation préféré permet, grâce à la mesure de l'épaisseur du mastic d'interposition, d'identifier et de localiser les copeaux, éventuellement présents entre les deux pièces, en particulier à proximité des éléments de fixation.

Le procédé P comporte, de plus, une étape E4 de présentation et/ou de transmission des résultats (conformité ou absence de conformité du mastic d'interposition, présence ou absence de copeaux et localisation éventuelle) obtenus à l'étape de traitement E3 à un opérateur ou à un système. La présentation peut être réalisée par différents moyens usuels sous forme d'affichage ou d'impression. Dans un mode de réalisation particulier, on peut réaliser une cartographie de la structure analysée en y mettant en évidence le mastic d'interposition par un jeu (ou code) de couleurs, les couleurs dépendant de l'épaisseur du mastic d'interposition. Ce mode de réalisation particulier permet à un opérateur d'identifier rapidement, de façon visuelle, tout problème de conformité à partir des couleurs de la cartographie.

Par ailleurs, le procédé P comporte une étape préliminaire E0 mise en œuvre antérieurement à la suite d'étapes E1, E2, E3 et E4. L'étape préliminaire E0 consiste à déterminer le modèle de propagation du type de mastic d'interposition utilisé. Le type mastic d'interposition peut varier en fonction de ses composants, de ses propriétés, ...

Pour ce faire, le mastic d'interposition utilisé est analysé afin de définir la vitesse de propagation du signal ultrasonore dans ledit mastic d'interposition en fonction du temps de polymérisation (par exemple en jours ou en heures) dudit mastic d'interposition et de la température de l'environnement dans lequel se trouve ledit mastic d'interposition. A cet effet, on réalise des mesures ultrasonores sur du mastic d'interposition (présentant ces propriétés) qui est intégré dans une structure et pour lequel on connaît exactement l'épaisseur. On mesure le temps de vol du signal ultrasonore à travers cette épaisseur de mastic d'interposition, et on obtient ainsi une relation entre l'épaisseur (connue) du mastic d'interposition et le temps de vol (mesuré), qui permet de déterminer la vitesse de propagation vp précitée (exprimée par exemple en mm/µs). Les mesures ultrasonores peuvent être réalisées à l'aide d'une unité de mesure similaire à l'unité de mesure ultrasonore 7.

On obtient ainsi une caractérisation comportementale du mastic d'interposition utilisé, en fonction du temps de polymérisation (en jours ou en heures) et de la température de l'environnement (par exemple entre 18°C et 30°C).

Dans un mode de réalisation particulier, on détermine, à l'étape préliminaire E0, un modèle de propagation pour une pluralité de types différents de mastic d'interposition. Les différents modèles obtenus ainsi peuvent, par exemple, être intégrés dans la base de données 15 (figure 1).

Dans ce mode de réalisation particulier, le procédé d'analyse P est apte à analyser la conformité de l'un quelconque de ces types différents de mastic d'interposition. Il suffit pour ce faire qu'à l'étape de traitement E2, on utilise le modèle de propagation correspondant au type de mastic d'interposition pour lequel les mesures ont été réalisées à l'étape de mesure E1.

Dans le cadre de la présente invention, la structure 2 qui est analysée peut également comprendre plus de deux pièces partiellement superposées, par exemple trois pièces 4A, 4B et 4C comme représenté sur la figure 7, avec à chaque fois d'une couche de mastic d'interposition 3 agencée entre deux pièces superposées directement successives, à savoir entre les pièces 4A et 4B et entre les pièces 4B et 4C dans l'exemple de la figure 7. Dans ce cas, à partir de l'analyse du signal ultrasonore S2 renvoyé et notamment des pics caractéristiques de ce signal ultrasonore S2, on est en mesure de déterminer le temps de vol à travers chacune des couches de mastic d'interposition 3, et ainsi d'en déduire la conformité ou l'absence de conformité.

Par ailleurs, le procédé P peut être mis en œuvre sur différents types de structure, formés par exemple :
- de pièces métalliques superposées ; ou
- de pièces superposées en matériau composite ; ou
- d'une superposition à la fois d'au moins une pièce métallique et d'au moins une pièce en matériau composite.

Le dispositif 1 et le procédé P, tels que décrits ci-dessus, présentent ainsi de nombreux avantages. En particulier, ils permettent :
- de garantir, sans désassemblage, un fluage correct du mastic d'interposition avec une quantification associée en cas de doute ; et
- de garantir, sans désassemblage, l'absence de copeaux aux interfaces de la structure.

Le dispositif 1 peut être utilisé dans différentes applications.

Dans une première application possible, le dispositif 1 est utilisé pour réaliser des vérifications de conformité lors d'opérations d'assemblage, par exemple d'un aéronef, et notamment lors d'opérations d'assemblage « sans éclatement ». Le dispositif 1 permet dans cette application de réaliser une vérification précise, rapide et fiable de la conformité du mastic d'interposition intégré dans la structure et de l'absence de copeaux, sans désassembler la structure.

Dans une telle application, le dispositif 1 peut être utilisé pour réaliser des mesures à un ou plusieurs points de mesure particuliers de la structure 2, par exemple à un ou plusieurs endroits où l'on estime qu'un problème de conformité puisse exister. Ces mesures peuvent être réalisées au cours d'une opération d'assemblage, ou lors d'une vérification ultérieure.

Le dispositif 1 peut également être utilisé pour réaliser des mesures à une pluralité de points de mesure différents de la structure, de manière à analyser toute une surface donnée, par exemple toute la surface où du mastic d'interposition a été appliqué.

Dans un mode de réalisation particulier, au moins l'unité de mesure ultrasonore 7 du dispositif 1 est montée sur une tête de travail d'un système de perçage et de rivetage, en particulier automatisé. Le dispositif 1 suit ainsi les mouvements de la tête de travail et est en mesure de réaliser des analyses à tous les endroits couverts par cette tête de travail et donc notamment aux points de fixation. Dans ce mode de réalisation particulier, le module de traitement 12 du dispositif 1 peut être intégré dans une unité de commande du système de perçage et de rivetage.

En outre, dans une seconde application possible, le dispositif 1 est utilisé pour valider de nouvelles étapes ou de nouvelles actions d'opérations d'assemblage d'un aéronef, notamment d'opérations d'assemblage « sans éclatement ». A titre d'exemple, le dispositif 1 peut être utilisé pour valider de nouveaux éléments de fixation ou un nouveau mastic d'interposition.

## Revendications

1. Procédé d'analyse de conformité d'un mastic d'interposition intégré dans une structure, en particulier d'un aéronef, ladite structure (2) comprenant au moins deux pièces (4A, 4B) partiellement superposées entre lesquelles est agencé le mastic d'interposition (3), la structure (2) comprenant une pluralité de réseaux rectangulaires (R1, R2), chacun desdits réseaux rectangulaires (R1, R2) étant défini par quatre points de fixation destinés à solidariser les pièces (4A, 4B) de la structure (2), ledit procédé (P) comportant au moins une suite d'étapes comprenant :
- une étape de mesure (E1), mise en œuvre par une unité de mesure ultrasonore (7), consistant à générer un signal ultrasonore (S1), à envoyer le signal ultrasonore (S1) dans la structure (2) à partir d'au moins un point de mesure (M1, M2, M3) et à mesurer l'amplitude du signal ultrasonore (S2) renvoyé par ladite structure (2) en fonction d'un temps de vol correspondant ;
- une première étape de traitement (E2), mise en œuvre par une première unité de traitement (13), consistant à déterminer l'épaisseur du mastic d'interposition au niveau dudit point de mesure (M1, M2, M3), à partir des mesures réalisées à l'étape de mesure (E1) et à l'aide d'un modèle de propagation prédéterminé dudit mastic d'interposition (3) ainsi que de données auxiliaires comprenant au moins la température et la durée depuis laquelle le mastic d'interposition (3) a été intégré dans la structure (2), ledit modèle de propagation étant caractéristique du type dudit mastic d'interposition (3) et fournissant une valeur d'épaisseur du mastic d'interposition (3) en fonction du temps de vol du signal ultrasonore dans le mastic d'interposition (3) ainsi que desdites données auxiliaires ; et
- une seconde étape de traitement (E3), mise en œuvre par une seconde unité de traitement (17), consistant à déduire, à partir de l'épaisseur du mastic d'interposition (3) déterminée à la première étape de traitement (E2), au moins une conformité ou une absence de conformité dudit mastic d'interposition (3), la détermination de la conformité du mastic d'interposition (3) consistant à vérifier, pour chacun des réseaux rectangulaires (R1, R2) de la structure (2), que l'épaisseur du mastic d'interposition (3) est comprise dans un premier domaine de valeurs prédéterminé au centre du réseau rectangulaire (R1, R2) et que l'épaisseur du mastic d'interposition (3) est inférieure à une valeur prédéterminée aux coins du réseau rectangulaire (R1, R2).

2. Procédé selon la revendication 1,
**caractérisé en ce que** l'étape de mesure (E1) consiste à réaliser des mesures à une pluralité de points de mesure (M1, M2, M3) différents de la structure (2), et **en ce que** la première étape de traitement (E2) consiste à déterminer l'épaisseur du mastic d'interposition (3) au niveau de ladite pluralité de points de mesure (M1, M2, M3) de la structure (2).

3. Procédé selon l'une des revendications 1 et 2,
**caractérisé en ce que** la seconde étape de traitement (E3) consiste à déterminer également la présence ou l'absence de copeaux dans la structure (2).

4. Procédé selon l'une quelconque des revendications 1 à 3,
**caractérisé en ce qu'**il comporte, de plus, une étape préliminaire (E0), mise en œuvre antérieurement à ladite suite d'étapes et consistant à déterminer ledit modèle de propagation au moins dudit type de mastic d'interposition (3).

5. Procédé selon la revendication 4,
**caractérisé en ce que** l'étape préliminaire (E0) consiste à déterminer un modèle de propagation pour chacun d'une pluralité de types différents de mastic d'interposition (3).

6. Procédé selon l'une quelconque des revendications précédentes,
**caractérisé en ce que** l'étape de mesure (E1) consiste à générer un signal ultrasonore (S1) présentant une fréquence comprise entre 10 MHz et 15 MHz.

7. Dispositif d'analyse de conformité d'un mastic d'interposition intégré dans une structure, en particulier d'un aéronef, ladite structure (2) comprenant au moins deux pièces (4A, 4B) partiellement superposées entre lesquelles est agencé le mastic d'interposition (3), la structure (2) comprenant une pluralité de réseaux rectangulaires (R1, R2), chacun desdits réseaux rectangulaires (R1, R2) étant défini par quatre points de fixation destinés à solidariser les pièces (4A, 4B) de la structure (2), ledit dispositif (1) comportant au moins :
- une unité de mesure ultrasonore (7) configurée pour générer un signal ultrasonore (S1), pour envoyer le signal ultrasonore (S1) dans la structure (2) à partir d'au moins un point de mesure (M1, M2, M3), et pour mesurer l'amplitude du signal ultrasonore (S2) renvoyé par ladite structure (2) en fonction d'un temps de vol correspondant ;
- une première unité de traitement (13) configurée pour déterminer l'épaisseur du mastic d'interposition (3) au niveau dudit point de mesure (M1, M2, M3), à partir des mesures réalisées par l'unité de mesure ultrasonore (7) et à l'aide d'un modèle de propagation prédéterminé dudit mastic d'interposition (3) ainsi que de données auxiliaires comprenant au moins la température et la durée depuis laquelle le mastic d'interposition (3) a été intégré dans la structure (2), ledit modèle de propagation étant caractéristique du type dudit mastic d'interposition (3) et fournissant une valeur d'épaisseur du mastic d'interposition (3) en fonction du temps de vol du signal ultrasonore dans le mastic d'interposition (3) ainsi que desdites données auxiliaires ; et
- une seconde unité de traitement (17) configurée pour déduire, à partir de l'épaisseur du mastic d'interposition (3) déterminée par la première unité de traitement (13), au moins une conformité ou une absence de conformité dudit mastic d'interposition (3), la détermination de la conformité du mastic d'interposition (3) consistant à vérifier, pour chacun des réseaux rectangulaires (R1, R2) de la structure (2), que l'épaisseur du mastic d'interposition (3) est comprise dans un premier domaine de valeurs prédéterminé au centre du réseau rectangulaire (R1, R2) et que l'épaisseur du mastic d'interposition (3) est inférieure à une valeur prédéterminée aux coins du réseau rectangulaire (R1, R2).

8. Dispositif selon la revendication 7,
**caractérisé en ce que** la seconde unité de traitement (17) est configurée pour déterminer également la présence ou l'absence de copeaux dans la structure (2).

## Patentansprüche

1. Verfahren zur Analyse der Konformität eines in eine Struktur, insbesondere eines Luftfahrzeugs, integrierten Zwischenlagenkitts, wobei die Struktur (2) mindestens zwei teilweise übereinander gelagerte Werkstücke (4A, 4B) umfasst, zwischen denen der Zwischenlagenkitt (3) angeordnet ist, wobei die Struktur (2) eine Vielzahl von rechteckigen Gittern (R1, R2) umfasst, wobei jedes der rechteckigen Gitter (R1, R2) durch vier Befestigungspunkte definiert ist, die dazu vorgesehen sind, die Werkstücke (4A, 4B) der Struktur (2) fest zu verbinden, wobei das Verfahren (P) mindestens eine Abfolge von Schritten umfasst, umfassend:
- einen Messschritt (E1), der von einer Ultraschallmesseinheit (7) durchgeführt wird und darin besteht, ein Ultraschallsignal (S1) zu erzeugen, das Ultraschallsignal (S1) ausgehend von mindestens einem Messpunkt (M1, M2, M3) in die Struktur (2) auszusenden und die Amplitude des von der Struktur (2) zurückgeworfenen Ultraschallsignals (S2) in Abhängigkeit von einer entsprechenden Flugzeit zu messen;
- einen ersten Verarbeitungsschritt (E2), der von einer ersten Verarbeitungseinheit (13) durchgeführt wird und darin besteht, die Dicke des Zwischenlagenkitts am Messpunkt (M1, M2, M3) ausgehend von den im Messschritt (E1) vorgenommenen Messungen und mithilfe eines vorbestimmten Ausbreitungsmodells des Zwischenlagenkitts (3) sowie von Hilfsdaten zu ermitteln, die mindestens die Temperatur und die Dauer, seit der der Zwischenlagenkitt (3) in die Struktur (2) integriert wurde, umfassen, wobei das Ausbreitungsmodell den Typ des Zwischenlagenkitts (3) kennzeichnet und einen Wert der Dicke des Zwischenlagenkitts (3) in Abhängigkeit von der Flugzeit des Ultraschallsignals im Zwischenlagenkitt (3) sowie den Hilfsdaten bereitstellt; und
- einen zweiten Verarbeitungsschritt (E3), der von einer zweiten Verarbeitungseinheit (17) durchgeführt wird und darin besteht, ausgehend von der Dicke des Zwischenlagenkitts (3), die im ersten Verarbeitungsschritt (E2) ermittelt wurde, mindestens eine Konformität oder das Fehlen einer Konformität des Zwischenlagenkitts (3) zu folgern, wobei die Ermittlung der Konformität des Zwischenlagenkitts (3) darin besteht, für jedes der rechteckigen Gitter (R1, R2) der Struktur (2) zu überprüfen, dass die Dicke des Zwischenlagenkitts (3) in der Mitte des rechteckigen Gitters (R1, R2) in einem vorbestimmten ersten Wertebereich liegt und dass die Dicke des Zwischenlagenkitts (3) an den Ecken des rechteckigen Gitters (R1, R2) kleiner als ein vorbestimmter Wert ist.

2. Verfahren nach Anspruch 1,
**dadurch gekennzeichnet, dass** der Messschritt (E1) darin besteht, Messungen an einer Vielzahl von unterschiedlichen Messpunkten (M1, M2, M3) der Struktur (2) vorzunehmen und dadurch, dass der erste Verarbeitungsschritt (E2) darin besteht, die Dicke des Zwischenlagenkitts (3) an der Vielzahl von Messpunkten (M1, M2, M3) der Struktur (2) zu ermitteln.

3. Verfahren nach einem der Ansprüche 1 und 2,
**dadurch gekennzeichnet, dass** der zweite Verarbeitungsschritt (E3) darin besteht, ebenfalls das Vorhandensein oder das Fehlen von Spänen in der Struktur (2) zu ermitteln.

4. Verfahren nach einem der Ansprüche 1 bis 3,
**dadurch gekennzeichnet, dass** es außerdem einen vorläufigen Schritt (E0) umfasst, der vor der Abfolge von Schritten durchgeführt wird und darin besteht, das Ausbreitungsmodell des mindestens einen Zwischenlagenkitts (3) festzulegen.

5. Verfahren nach Anspruch 4,
**dadurch gekennzeichnet, dass** der vorläufige Schritt (E0) darin besteht, ein Ausbreitungsmodell für jedes einer Vielzahl von unterschiedlichen Typen von Zwischenlagenkitten (3) festzulegen.

6. Verfahren nach einem der vorstehenden Ansprüche, **dadurch gekennzeichnet, dass** der Messschritt (E1) darin besteht, ein Ultraschallsignal (S1) zu erzeugen, das eine Frequenz zwischen 10 MHz und 15 MHz aufweist.

7. Vorrichtung zur Analyse der Konformität eines in eine Struktur, insbesondere eines Luftfahrzeugs, integrierten Zwischenlagenkitts, wobei die Struktur (2) mindestens zwei teilweise übereinander gelagerte Werkstücke (4A, 4B) umfasst, zwischen denen der Zwischenlagenkitt (3) angeordnet ist, wobei die Struktur (2) eine Vielzahl von rechteckigen Gittern (R1, R2) umfasst, wobei jedes der rechteckigen Gitter (R1, R2) durch vier Befestigungspunkte definiert ist, die dazu vorgesehen sind, die Werkstücke (4A, 4B) der Struktur (2) fest zu verbinden, wobei die Vorrichtung (1) mindestens Folgendes umfasst:
- eine Ultraschallmesseinheit (7), die dazu konfiguriert ist, ein Ultraschallsignal (S1) zu erzeugen, das Ultraschallsignal (S1) ausgehend von mindestens einem Messpunkt (M1, M2, M3) in die Struktur (2) auszusenden und die Amplitude des von der Struktur (2) zurückgeworfenen Ultraschallsignals (S2) in Abhängigkeit von einer entsprechenden Flugzeit zu messen;
- eine erste Verarbeitungseinheit (13), die dazu konfiguriert ist, die Dicke des Zwischenlagenkitts am Messpunkt (M1, M2, M3) ausgehend von den von der Ultraschallmesseinheit (7) vorgenommenen Messungen und mithilfe eines vorbestimmten Ausbreitungsmodells des Zwischenlagenkitts (3) sowie von Hilfsdaten zu ermitteln, die mindestens die Temperatur und die Dauer, seit der der Zwischenlagenkitt (3) in die Struktur (2) integriert wurde, umfassen, wobei das Ausbreitungsmodell den Typ des Zwischenlagenkitts (3) kennzeichnet und einen Wert der Dicke des Zwischenlagenkitts (3) in Abhängigkeit von der Flugzeit des Ultraschallsignals im Zwischenlagenkitt (3) sowie den Hilfsdaten bereitstellt; und
- eine zweite Verarbeitungseinheit (17), die dazu konfiguriert ist, ausgehend von der Dicke des Zwischenlagenkitts (3), die von der ersten Verarbeitungseinheit (13) ermittelt wurde, mindestens eine Konformität oder das Fehlen einer Konformität des Zwischenlagenkitts (3) zu folgern, wobei die Ermittlung der Konformität des Zwischenlagenkitts (3) darin besteht, für jedes der rechteckigen Gitter (R1, R2) der Struktur (2) zu überprüfen, dass die Dicke des Zwischenlagenkitts (3) in der Mitte des rechteckigen Gitters (R1, R2) in einem vorbestimmten ersten Wertebereich liegt und dass die Dicke des Zwischenlagenkitts (3) an den Ecken des rechteckigen Gitters (R1, R2) kleiner als ein vorbestimmter Wert ist.

8. Vorrichtung nach Anspruch 7,
**dadurch gekennzeichnet, dass** die zweite Verarbeitungseinheit (17) dazu konfiguriert ist, ebenfalls das Vorhandensein oder das Fehlen von Spänen in der Struktur (2) zu ermitteln.

## Claims

1. A method for analyzing the conformity of a faying-surface mastic integrated into a structure, in particular of an aircraft, said structure (2) comprising at least two partially superposed parts (4A, 4B) between which is arranged the faying-surface mastic (3), the structure (2) comprising a plurality of rectangular cells (R1, R2), each of said rectangular cells (R1, R2) being defined by four fastening points provided to secure parts (4A, 4B) of the structure (2), said method (P) comprising at least a sequence of steps comprising:
- a measuring step (E1), implemented by an ultrasonic measuring unit (7), consisting in generating an ultrasonic signal (S1), in sending the ultrasonic signal (S1) to the structure (2) from at least one measurement point (M1, M2, M3) and in measuring the amplitude of the ultrasonic signal (S2) sent back by said structure (2) as a function of a corresponding time-of-flight;
- a first processing step (E2), implemented by a first processing unit (13), consisting in determining the thickness of the faying-surface mastic at said measurement point (M1, M2, M3), on the basis of the measurements taken in the measuring step (E1) and using a predetermined propagation model of said faying-surface mastic (3) and auxiliary data comprising at least the temperature and the time for which the faying-surface mastic (3) has been integrated into the structure (2), said propagation model being characteristic of the type of said faying-surface mastic (3) and delivering a thickness value of the faying-surface mastic (3) depending on the time-of-flight of the ultrasonic signal through the faying-surface mastic (3) and on said auxiliary data; and
- a second processing step (E3), implemented by a second processing unit (17), consisting in deducing, from the thickness of the faying-surface mastic (3) determined in the first processing step (E2), at least a conformity or a non-conformity of said faying-surface mastic (3), the determination of a conformity of the faying-surface mastic consisting in verifying, for each of a plurality of rectangular cells (R1, R2) of the structure (2), that the thickness of the faying-surface mastic (3) is comprised in a predetermined first interval of values at the center of the rectangular cell (R1, R2) and that the thickness of the faying-surface mastic (3) is smaller than a predetermined value at the corners of the rectangular cell (R1, R2).

2. The method as claimed in claim 1,
wherein the measuring step (E1) consists in taking measurements at a plurality of different measurement points (M1, M2, M3) of the structure (2), and the first processing step (E2) consists in determining the thickness of the faying-surface mastic (3) at said plurality of measurement points (M1, M2, M3) of the structure (2).

3. The method as claimed in either of claims 1 and 2,
wherein the second processing step (E3) consists in also determining the presence or absence of swarf in the structure (2).

4. The method as claimed in any one of claims 1 to 3,
wherein it comprises, in addition, a preliminary step (E0), implemented before said sequence of steps and consisting in determining said propagation model at least of said type of faying-surface mastic (3).

5. The method as claimed in claim 4,
wherein the preliminary step (E0) consists in determining a propagation model for each of a plurality of different types of faying-surface mastic (3).

6. The method as claimed in any one of the preceding claims,
wherein the measuring step (E1) consists in generating an ultrasonic signal (S1) having a frequency comprised between 10 MHz and 15 MHz.

7. A device for analyzing the conformity of a faying-surface mastic integrated into a structure, in particular of an aircraft, said structure (2) comprising at least two partially superposed parts (4A, 4B) between which is arranged the faying-surface mastic (3), the structure (2) comprising a plurality of rectangular cells (R1, R2), each of said rectangular cells (R1, R2) being defined by four fastening points provided to secure parts (4A, 4B) of the structure (2), the device (1) comprising at least:
- an ultrasonic measuring unit (7) configured to generate an ultrasonic signal (S1), to send the ultrasonic signal (S1) to the structure (2) from at least one measurement point (M1, M2, M3), and to measure the amplitude of the ultrasonic signal (S2) sent back by said structure (2) as a function of a corresponding time-of-flight;
- a first processing unit (13) configured to determine the thickness of the faying-surface mastic (3) at said measurement point (M1, M2, M3), on the basis of the measurements taken by the ultrasonic measuring unit (7) and using a predetermined propagation model of said faying-surface mastic (3) and auxiliary data comprising at least the temperature and the time for which the faying-surface mastic (3) has been integrated into the structure (2), said propagation model being characteristic of the type of faying-surface mastic (3) and delivering a thickness value of the faying-surface mastic (3) depending on the time-of-flight of the ultrasonic signal through the faying-surface mastic (3) and on said auxiliary data; and
- a second processing unit (17) configured to deduce, from the thickness of the faying-surface mastic (3) determined by the first processing unit (13), at least a conformity or a non-conformity of said faying-surface mastic (3), the determination of a conformity of the faying-surface mastic consisting in verifying, for each of a plurality of rectangular cells (R1, R2) of the structure (2), that the thickness of the faying-surface mastic (3) is comprised in a predetermined first interval of values at the center of the rectangular cell (R1, R2) and that the thickness of the faying-surface mastic (3) is smaller than a predetermined value at the corners of the rectangular cell (R1, R2).

8. The device as claimed in claim 7,
wherein the second processing unit (17) is configured to also determine the presence or absence of swarf in the structure (2).
